# EUROPEAN PATENT SPECIFICATION

(11) **EP 4 321 970 B1**
(45) Date of publication and mention of the grant of the patent: **23.07.2025**
(21) Application number: 22189826.5
(22) Date of filing: 11.08.2022
(51) Int. Cl.: G06F 3/00, G06F 3/01, G06F 3/03

(54) **METHOD AND APPARATUS FOR ESTIMATING HUMAN POSES**
VERFAHREN UND GERÄT ZUR SCHÄTZUNG MENSCHLICHER POSEN
PROCÉDÉ ET APPAREIL D'ESTIMATION DE POSES HUMAINES

(43) Date of publication of application: 14.02.2024
(73) Proprietor: Hitachi, Ltd., Tokyo 100-8280 (JP)
(72) Inventor: AKIYAMA, Takayuki, London, EC2Y 5AJ (GB)
(74) Representative: MERH-IP Matias Erny Reichl Hoffmann Patentanwälte PartG mbB

(56) References cited:
- US-A1- 2022 035 443

## Description

The present subject matter relates to a method, a computer program product and an apparatus for estimating one or more poses of a person and a system including the apparatus.

To support persons involved in industrial processes in their work, augmented reality (AR)-based methods that display guidance content from the person's point of view are a key technology. Understanding the interaction between a person and a target object is necessary to provide appropriate information at the right time. To this end, motion capture is essential to estimate the person's skeletal information in global coordinates.

In Patent Literature 1, the movement of a target person is tracked with a third-person camera and the skeletal data of the person is determined therefrom. However, the use of a third-person camera only allows tracking of movements in a limited space. It is not suitable for tracking people outdoors or in an undefined or unknown space/environment and it has also the problem of occlusion. Patent Literature 2 shows a method for tracking the motion of a target person using a wide-angle camera attached to the person's chest that tracks parts of the person's body to determine the skeletal data. Since only parts of the target's body are tracked, a high computational effort is required to estimate the skeletal data with appropriate accuracy. Patent Literature 3 describes a system for generating complementary data for a visual display that includes one or plurality of wearable sensors that collect tracking data for a user's position, orientation, and movement. The sensor(s) are in communication with at least one processor that may be configured to receive tracking data, identify missing tracking data, generate complementary data to substitute for missing tracking data, generate a 3D model comprised of tracking data and complementary data, and communicate the 3D model to a display. Complementary tracking data may be generated by comparison to a key pose library, by comparison to past tracking data, or by inverse kinematics.
Patent Literature 1: US 2019/164346 A1
Patent Literature 2: US 2021/0035326 A1
Patent Literature 3: US 2022/035443 A1

The herein described subject matter addresses the technical object of improving an estimation of human poses in an unknown and unrestricted environment. This object is achieved by the subject matter of the independent claims. Further preferred developments are described in the dependent claims.

According to the subject matter set forth in the independent claims, there is proposed a method for estimating one or more poses of a person equipped with a camera and equipped with one or more sensors, and a computer program product storable in a memory comprising instructions which, when carried out by a computer, cause the computer to perform the method.

According to the proposed method, camera data from the camera attached to a head of the person is received and a depth map is created based on the received camera data to generate three-dimensional camera data. In other words, camera data captured from the person's point of view (POV) is received, and a depth map is created from this POV camera data. This means that a 3D-view of a scene in front of the person wearing the camera is provided. The term depth map is known in the field and may be known to include an image that includes information which exhibit information as to the distance of the surfaces of objects from a viewpoint, here preferably POV.

The camera attached to the head of the person (head-mounted camera) may preferably be an RGB-D camera, which already provides a depth map on which each pixel has a value representing the distance from the camera. Alternatively or additionally, a stereo camera may be used, in which case the depth map can be created by triangulation, for example. It is also possible to use a conventional RGB camera as head-mounted camera and create the depth map using artificial intelligence (Al). In the latter case, for example, deep learning depth prediction may be applied. In order to train the deep learning depth prediction, RGB-D datasets can be used, which may include typical indoor scenes, outdoor scenes, or mixed indoor/outdoor scenes and may be collected by RGB-D cameras or multi-view stereo (MVS) approaches, for example.

The camera may be mounted at the head of the person, preferably, while other body parts of the person may also be used for attaching the camera when it allows that the line of sight of the camera is similar or close to the line of sight of said person.

Furthermore, one or more signals from the one or more sensors attached to a body of the person (body sensors) are received based on which skeletal data is created. The one or more sensors may preferably be inertial measurement units (IMU), which may be attached directly to the person's body or may be integrated in the clothes the person is wearing (smart clothes). Each IMU may preferably include at least one accelerometer, at least one gyroscope and at least one magnetometer.

The skeletal data may be created based on the sensor signals by modelling a kinematic chain, which can describe the motion constraints of an articulated rigid body such as the human skeleton. The underlying idea behind a kinematic chain is that the motion of a body segment is given by the motion of the previous body segment in the chain and an angular rotation around a joint axis. The kinematic chain may be defined with a six degree of freedom root joint representing the global rigid body motion and a set of one degree if freedom revolute joints describing the angular motion of the limbs, for example. Preferably, the created skeletal data may include position and orientation of parts of the person's body.

In a further step, the orientation of the camera attached to the head of the person is determined using the created skeletal data. This means that the orientation of the camera is determined based on an orientation of a body part related to the position of the camera.

According to an example, the orientation of the camera may be determined based on an orientation of the head (or other body part where the camera is mounted) of the person, wherein the orientation of the person's head may be derived from the skeletal data.

Then, the three-dimensional camera data and the skeletal data are aligned based on the determined orientation of the camera and a position of the camera. In other words, the position of the camera, which may be a defined mounting position on the head of the person, may be used as a fixing point for matching the skeletal data and the three-dimensional camera data. Then, a pose of the person is estimated based on the aligned three-dimensional camera data and the skeletal data.

This means that the proposed method allows to align skeletal data derived from sensors attached to the body of a person to a coordinate frame of a camera attached to the person's head using the position of the camera as an anchor object.

According to an example, the position of the camera may define a zero point of a camera coordinate frame and a skeletal coordinate frame. This means that the two different coordinate frames are merged using the position of the camera as a fixing point which is known in both coordinate frames.

According to an example, the camera coordinate frame and the skeletal coordinate frame may be transformed into a global coordinate frame. In other words, using the position of the head mounted camera, the origin of the depth map can be transferred to the camera position according to the skeletal coordinate frame, and the two coordinate frames can be integrated into a global coordinate frame.

According to an example, if a body part (here, the body part may preferably be another/second body part compared to the body part where the camera is mounted, while it may also be the same body part) of the person is tracked by the three-dimensional camera data, a position of the body part may be determined in the camera coordinate frame and the skeletal coordinate frame, and the positions of the tracked body part determined in the two coordinate frames may be compared in the global coordinate frame. The body part may preferably be a hand of the person. This means that an additional anchor object can be used to improve the merging of the different coordinate frames.

If a difference between the body part positions determined in the camera coordinate frame and the skeleton coordinate frame is smaller than a predetermined threshold, the orientation of the camera may be maintained, and if a difference between the body part positions determined in the camera coordinate frame and the skeleton coordinate frame is larger than the first predetermined threshold, the orientation of the camera may be updated.

In order to update the camera orientation, the latter may be varied by a predetermined amount and the determination and comparison of the body part position in both coordinate frames may be repeated until the difference in position falls below the first predetermined threshold. To minimize the difference and to optimize the matching between the camera and the skeletal coordinate frame, an AI model may be used which may be trained with three-dimensional camera data and skeletal data having a perfect match of both coordinate systems.

According to an example, if an object is tracked by the three-dimensional camera data and a body part of the person interacts with the object, a position of the tracked object may be determined in the camera coordinate frame, and a position of the body part interacting with the object may be determined in the skeletal coordinate frame. The body part may preferably be a hand of the person, and the object may be, for example, a workpiece on which the person is working.

The positions of the tracked object and the body part interacting with the tracked object determined in the two coordinate frames may be compared in the global coordinate frame, and if a difference between the positions of the tracked object and the body part interacting with the tracked object determined in the camera coordinate frame and the skeleton coordinate frame is smaller than a second predetermined threshold, the orientation of the camera may be maintained. The second predetermined threshold may be identical to the first predetermined threshold. However. it may be also possible that the second predetermined threshold is smaller or langer than the first predetermined threshold.

However, if a difference between the positions of the tracked object and the body part interacting with the tracked object determined in the camera coordinate frame and the skeleton coordinate frame is larger than the second predetermined threshold, the orientation of the camera may be updated. The updating of the camera orientation may be performed as in the case described above when only a body part position is compared in both coordinate frames.

The above-described method allows for estimating the poses of a person equipped with a camera and one or more sensors in an unknown and unrestricted environment. Furthermore, it is possible to determine interactions of the person with surrounding objects such as working pieces which may be machined by the person, for example.

According to the subject matter set forth in the independent claims, there is further proposed an apparatus for estimating one or more poses of a person and a system for supporting a working process including the apparatus.

The apparatus comprises a camera configured to be attached to preferably a head of a person (or another body part which allows locating the camera's line of sight closely or with similar orientation and field of view as the person's view), and one or more sensors configured to be attached to a body of the person.

Further, the apparatus comprises a depth mapping device and a skeletal data modelling device, wherein the depth mapping device is configured to receive camera data from the camera attached to the head of the person, and to create a depth map based on the received camera data to generate three-dimensional camera data, and the skeletal data modelling device is configured to receive one or more signals from the one or more sensors attached to a body of the person, and to create skeletal data based on the one or more received signals.

Additionally, the apparatus includes an alignment device configured to receive the three-dimensional camera data and the skeletal data, to determine the orientation of the camera attached to the head of the person using the created skeletal data, and to align the three-dimensional camera data and the skeletal data based on the determined orientation of the camera and a position of the camera.

Furthermore, the apparatus includes a pose estimation device configured to receive the aligned three-dimensional camera data and skeletal data and to estimate a pose of the person based on the aligned camera and skeletal data.

The depth mapping device, the skeletal data modelling device, the alignment device and the pose estimation device may be included in one or more computing units, each computing unit including at least one processor, at least one ROM, at least one RAM, at least one storage medium such as a hard disk, a removable disk, a CD-ROM, or any other form of storage medium known in the art. An exemplary storage medium may be coupled to a processor such that the processor can read information from, and write information to, the storage medium. Alternatively, the storage medium may be integrated into the processor. The processor and the storage medium may be included in an application-specific integrated circuit that may be located in a user terminal, for example. Alternatively, the processor and the storage medium may be located as discrete components in the user terminal or in any other suitable device.

According to an example, the skeletal data modelling device may determine an orientation of the head of the person and send the determined orientation of the person's head to the alignment device. Furthermore, the alignment device may determine the orientation of the camera based on the received orientation of the person's head, and may define the position of the camera as a zero point of a camera coordinate frame and a skeletal coordinate frame being transformed into a global coordinate frame.

According to an example, the apparatus may further comprise a body part tracking device, an object tracking device and a body part/object interaction device. The body part tracking device, the object tracking device and the body part/object interaction device may be included in one or more computing units, each computing unit including at least one processor, at least one ROM, at least one RAM, at least one storage medium such as a hard disk, a removable disk, a CD-ROM, or any other form of storage medium known in the art.

In case a body part of the person is tracked by the body part tracking device in the three-dimensional camera data, the alignment device may determine a position of the body part in the camera coordinate frame and the skeletal coordinate frame and may compare the positions of the tracked body part determined in the two coordinate frames in the global coordinate frame.

If a difference between the body part positions determined in the camera coordinate frame and the skeleton coordinate frame is smaller than a first predetermined threshold, the alignment device may maintain the orientation of the camera. However, if a difference between the body part positions determined in the camera coordinate frame and the skeleton coordinate frame is larger than the first predetermined threshold, the alignment device may update the orientation of the camera.

According to an example, if an object is tracked in the three-dimensional camera data by the object tracking device in the three-dimensional camera data and an interaction of a body part of the person with the object is detected by the body part/object interaction device in the skeletal data, the alignment device may determine a position of the tracked object in the camera coordinate frame, and may determine the position of the body part interacting with the object in the skeletal coordinate frame. Furthermore, the alignment device may compare the positions of the tracked object and the body part interacting with the tracked object determined in the two coordinate frames in the global coordinate frame.

If a difference between the positions of the tracked object and the body part interacting with the tracked object determined in the camera coordinate frame and the skeleton coordinate frame is smaller than a second predetermined threshold, the alignment device may maintain the orientation of the camera. However, if a difference between the positions of the tracked object and the body part interacting with the tracked object determined in the camera coordinate frame and the skeleton coordinate frame is larger than the predetermined threshold, the alignment device may update the orientation of the camera.

The proposed system for supporting a working process includes a body model database for storing at least one body model, at least one output device comprising at least one display, and the above-described apparatus. For example, the at least one body model may be a skinned multi-person linear (SMPL) model. However, any other type of body model may also be used. The database may be included in the one or more computing units of the apparatus or may be located, for example, on a separate server outside the apparatus.

The system displays one or more poses of a person equipped with a camera and one or more sensors on the display of the output device. The person may preferably be a worker/mechanic/technician instructed to perform a particular working/assembling/ machining process. The person's poses are estimated by the apparatus using the at least one body model stored in the body model database. Thus, the system allows, for example, to provide a video sequence based on the poses of the person, e.g., to demonstrate a working process for assembling/machining a workpiece.

Besides the at least one display, the output device may include at least one interface with a plurality of output ports, to transmit information to external devices. For example, output parameters of the body model may be transmitted to an external device to provide information regarding the person's poses estimated by the apparatus.

According to an example, the system may further include at least one human action database for storing a plurality of human actions, at least one guidance database for storing a plurality of guidance information related to the plurality of human actions stored in the human action database, an action detection device for detecting an action of the person, and an augmented reality device for providing augmented reality elements to the person.

The action detection device, the human action data base and the guidance database may be included in a common computing unit which may be configured to receive output parameters of the body model. The common computing unit may be part of the apparatus or may be located outside the apparatus. Alternatively, the human action database, the guidance databases and the action detection device may be included in separate computing units being located within or separate from the apparatus.

The system may detect an action of a person by comparing one or more poses of the person estimated by the apparatus with the plurality of human actions stored on the human action database and may determine a guidance information related to the detected action based on the plurality of guidance information stored in the guidance database. The guidance information may include information for supporting/improving/optimizing a working process as well as information for avoiding dangerous situations throughout the working process (warning signals).

Subsequently, the system may output the determined guidance information to the augmented reality device of the person via the output device. The augmented reality device may be a pair of glasses, a smartphone, a tablet or any other device suitable for providing augmented reality elements.

According to an example, the at least one human action database may store predetermined working actions. A working action may be a human action related to a working process such as assembling, drilling, jiggering etc.. Alternatively or in addition the human action database may store predetermined dangerous actions. A dangerous action may be a human action leading to a dangerous situation for the person carrying out the working process or other persons in the vicinity.

According to an example, the output device may output at least one guidance information.

For example, the guidance information may include work instructions that can be sent to the augmented reality device worn/carried by the person or provided otherwise to the person.

Alternatively or in addition the output device may output at least one warning signal. The warning signal may be a visual and/or audible warning signal that alerts the person that his/her current action may lead to a dangerous situation.

Summarizing, the disclosed subject matter allows for estimating the poses of a person equipped with a camera and one or more sensors in an unknown and unrestricted environment. Furthermore, it is possible to determine interactions of the person with surrounding objects such as working pieces which may be machined by the person, for example. Monitoring the interactions of a working person with his/her environment enables a continuous guidance which improves the person's working quality as well as his/her safety and health.

In the following the claimed subject matter will be further explained based on at least one preferential example with reference to the attached drawings, wherein:
- Figure 1: shows schematically a first example of an apparatus according to the proposed subject matter;
- Figure 2: shows schematically a first example for aligning three-dimensional camera data camera data and skeletal data according to the proposed subject matter;
- Figure 3: shows a flow chart describing a first example of the method according to the proposed subject matter;
- Figure 4: shows schematically a second example of an apparatus according to the proposed subject matter;
- Figure 5: shows schematically a second example for aligning three-dimensional camera data and skeletal data according to the proposed subject matter;
- Figure 6: shows a flow chart describing a second example of a method according to the proposed subject matter;
- Figure 7: shows a flow chart describing a camera orientation optimization usable in the second example of the method according to the proposed subject matter;
- Figure 8: shows schematically a third example of an apparatus according to the proposed subject matter;
- Figure 9: shows a flow chart describing a third example of a method according to the proposed subject matter;
- Figure 10: shows a flow chart describing a camera orientation optimization usable in the third example of the method according to the proposed subject matter;
- Figure 11: shows schematically a first example of a system according to the proposed subject matter;
- Figure 12: shows schematically a second example of a system according to the proposed subject matter; and
- Figure 13: shows schematically a third example of a system according to the proposed subject matter.

In the figures, the same elements are provided with the same reference signs, so that a repeated description of identical elements is omitted if not necessary.

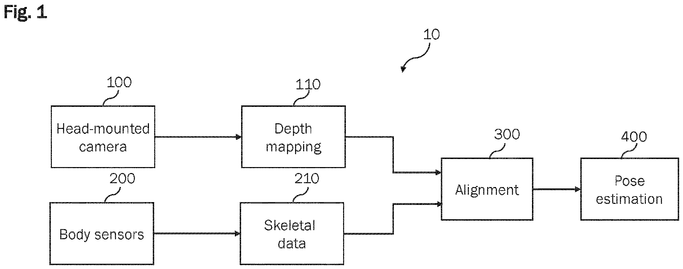

Figure 1 shows schematically a first example of an apparatus 10 according to the proposed subject matter. The apparatus comprises a head-mounted camera 100, one or more body sensors 200, a depth mapping device 110, a skeletal data modelling device 210, an alignment device 300 and a pose estimation device 400. The head-mounted camera 100 may be attached to a person's head, wherein the person may be a worker/mechanic/
technician instructed to perform a particular working/assembling/machining process.

The head-mounted camera 100 may capture camera data from the person's point of view and send the captured camera data to the depth mapping device 110, which creates a depth map based on the received camera data to generate three-dimensional camera data. In other words, the depth mapping device 110 provides a 3D-view of the scene in front of the person wearing the head-mounted camera 100.

The head-mounted camera 100 may preferably be an RGB-D camera, which already provides a depth map on which each pixel has a value representing the distance from the head-mounted camera 100. In this case, the depth mapping device 110 may be included in the head-mounted camera 100. Alternatively or additionally, a stereo camera may be used, in which case the depth map can be created by triangulation, for example. It is also possible to use a conventional RGB camera as head-mounted camera 100 and create the depth map using artificial intelligence (Al). In the latter case, for example, deep learning depth prediction may be applied. In order to train the deep learning depth prediction, RGB-D datasets can be used, which may include typical indoor scenes, outdoor scenes, or mixed indoor/outdoor scenes and may be collected by RGB-D cameras or multi-view stereo (MVS) approaches, for example.

The three-dimensional camera data generated by the depth mapping device 110 are then transmitted to the alignment device 300.

The one or more body sensors 200 may be located, for example, in the region of a joint of the person's body. Alternatively, the person may wear so-called "smart clothing" in which the body sensors are included, for example at the positions of the joints. The one or more body sensors 200 may preferably be inertial measurement units (IMU), wherein each IMU may preferably include at least one accelerometer, at least one gyroscope and at least one magnetometer.

The body sensors transmit the respective signals from the IMUs to the skeletal data modelling device 210, which subsequently generates skeletal data based on received signals. The skeletal data modelling device 210 may create the skeletal data by modelling a kinematic chain, which can describe the motion constraints of the human skeleton. In this way the position and orientation of the person's body parts can be determined in a skeletal coordinate frame and provided as skeletal data to the alignment device 300.

The alignment device 300 receives the three-dimensional camera data and the skeletal data, to determine the orientation of the camera attached to the head of the person using the created skeletal data. This means that the orientation of the camera is determined based on an orientation of a body part of the person related to the position of the camera. In particular, the orientation of the camera may be determined based on an orientation of the head of the person.

Then, the alignment device 300 aligns the three-dimensional camera data and the skeletal data based on the determined orientation of the camera and a position of the camera. In other words, the position of the camera, which may be a defined mounting position on the head of the person, may be used as a fixing point for matching the skeletal data and the three-dimensional camera data. Then, the alignment device 300 estimates a pose of the person based on the aligned three-dimensional camera data and the skeletal data.

This means that the proposed method allows to align skeletal data derived from sensors attached to the body of a person to a coordinate frame of a camera attached to the person's head using the position of the camera as an anchor object.

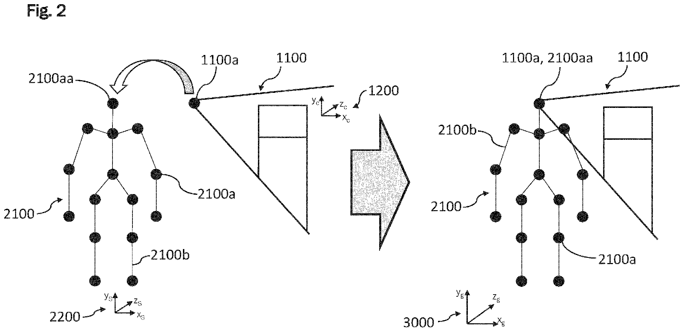

Figure 2 shows schematically a first example for aligning three-dimensional camera data 1100 and skeletal data 2100 according to the proposed subject matter.

The schematically depicted skeletal data 2100 (skeletal model 2100) comprises a plurality of joints 2100a interconnected by individual body segments 2100b. The skeletal data 2100 may be modelled as a kinematic chain assuming that the motion of a body segment is given by the motion of the previous body segment in the chain and an angular rotation around a joint axis. The kinematic chain may be defined with a six degree of freedom root joint representing the global rigid body motion and a set of one degree if freedom revolute joints describing the angular motion of the limbs, for example.

The schematically depicted three-dimensional camera data 1100 shows a point of view of the head-mounted camera 100, wherein the origin of the viewpoint is given by the position 1100a at which the camera is mounted to the person's head (not depicted).

To align the three-dimensional camera data 1100 and the skeletal data 2100, the position 1100a of the head-mounted camera 100 is transferred from the camera coordinate frame 1200 to the corresponding position 2100aa in the skeletal coordinate frame 2200. This transfer is illustrated by the curved arrow pointing from position 1100a to joint 2100aa of skeletal model 2100, wherein joint 2100aa is in this case representative of the entire head of the skeletal model to which the camera is attached. Furthermore, the orientation of the camera is derived from the skeletal model, for example, by referring to the orientation of the modelled head represented by the joint 2100aa.

As a result, both coordinate frames 1200, 2200 are combined in a global coordinate frame 3000, as illustrated by the big grey arrow pointing from the left to the right side of Fig. 2. On the right side of Fig. 2, the position 1100a and the joint 2100aa are merged into a single point, to illustrate that the position 1100a of the head-mounted camera 100 is associated with the corresponding position of the skeleton model 2000.

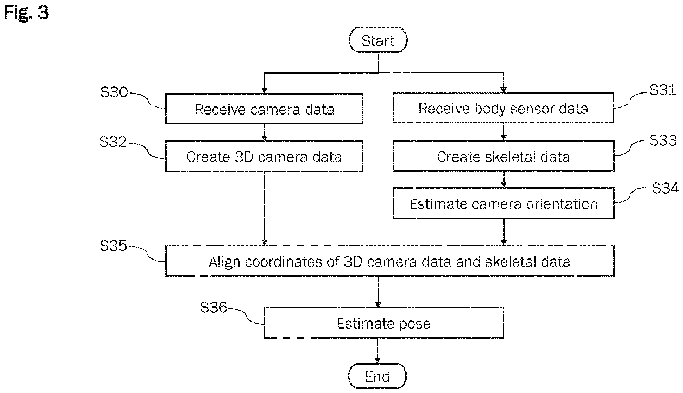

Figure 3 shows a flow chart describing a first example of the method according to the proposed subject matter. The flow chart describes as to how one or more poses of a person equipped with a head-mounted camera 100 and one or more body sensors 200, which may preferably be IMUs, can be estimated.

After starting the process, in step S30, camera data from the head-mounted camera 100 is received by the depth mapping device 110, to create a depth map and provide three-dimensional camera data 2100 (S32). In parallel, body sensor data is received by the skeletal data modelling device 210 in step S31, which has been transmitted from the body sensors 200 attached to the person. Subsequently, skeletal data 2100 is created in step S33 by using a kinetic chain model, for example. Then, the camera orientation is estimated in step S34 using the orientation of a modelled body part of the skeletal data 2100 being related to the position of the head-mounted camera on the person's head. Preferably, the modelled body part may be the head 2100aa of the skeletal model 2100.

In the subsequent step S35, the three-dimension camera data 1100 and the skeletal data 2100 are aligned by transferring the position 1100a of the head-mounted camera 100 from the camera coordinate frame 1200 to the corresponding position 2100aa in the skeletal coordinate frame 2200, so that both coordinate frames 1200, 2200 are combined in a global coordinate frame 3000. Based on the aligned three-dimensional camera data 1100 and the skeletal data 2100, one or more poses of the person can be estimated in step S36 and then the process can be terminated.

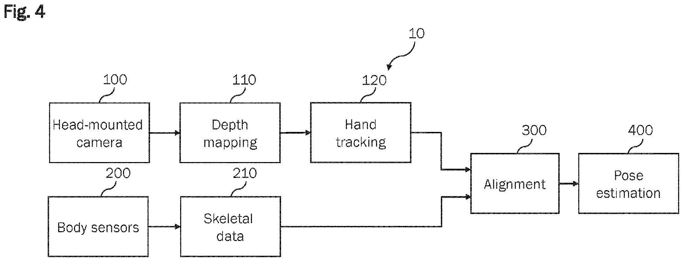

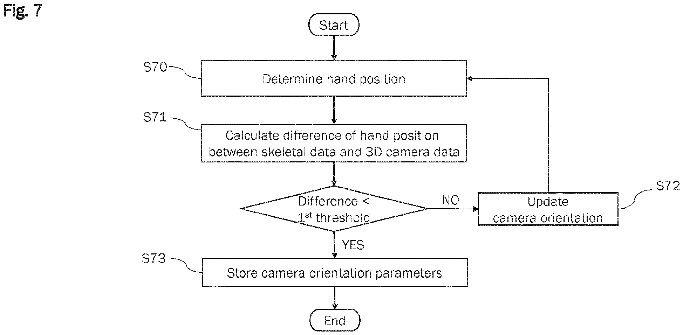

Figure 4 shows schematically a second example of an apparatus 10 according to the proposed subject matter. The apparatus 10 according to the second example is identical to the apparatus 10 of the first example except that a hand tracking device (body part tracking device) 120 is added thereto. In case a hand of the person equipped with the camera 100 and the body sensors 200 is tracked in the three-dimensional camera data 1100 by the hand tracking device 120, the alignment device 300 may determine a position of the hand in the camera coordinate frame 1200 and the skeletal coordinate frame 2200 and may compare the positions of the tracked hand determined in the two coordinate frames 1200, 2200 in the global coordinate frame 3000. Based on the difference between the determined positions in both coordinate frames 1200,2200, the orientation of the camera 100 may be optimized by the alignment device 300 as described below in connection with Fig. 7.

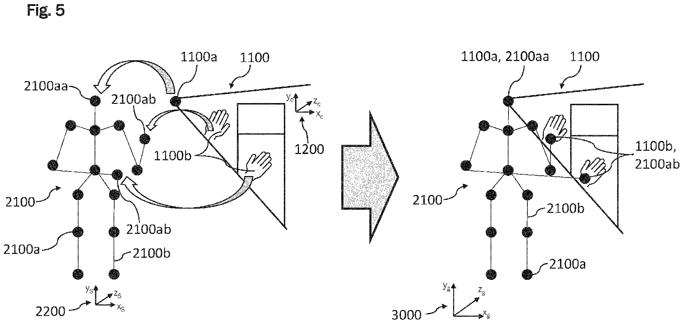

Figure 5 shows schematically a second example for aligning three-dimensional camera data 1100 and skeletal data 2100 according to the proposed subject matter. Fig. 5 is identical to Fig. 2 except that the schematically depicted three-dimensional camera data 1100 includes positions of tracked body parts 1100b, namely the hands 1100b of the person equipped with the camera 100 and the body sensors 200. As in the example shown in Fig. 2, the position 1100a of the head-mounted camera 100 is transferred from the camera coordinate frame 1200 to the corresponding position in the skeletal coordinate frame 2200. This transfer is again illustrated by the curved arrow pointing from position 1100a to joint 2100aa representing the head of the skeletal model 2100 to which the camera 100 is attached.

In addition, the position of the tracked hands 1100b is mapped to the hand positions 2100ab of the skeleton data 2100. This hand position transfer is demonstrated by two additional curved arrows pointing from the hand positions 1100b tracked in the camera frame to the hand positions 2100ab of the skeletal model 2100. The mapping may be performed by comparing the hand positions 1100b, 2100ab in both coordinate frames 1200, 2200 and minimizing the difference between them. The corresponding result is shown on the right side of Fig. 5, where both positions 1100b and 2100ab are merged.

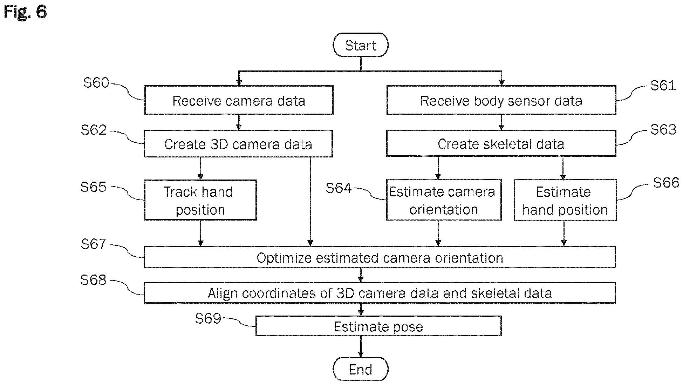

Figure 6 shows a flow chart describing a second example of a method according to the proposed subject matter. The steps S60 to S64 are identical to the steps S30 to S34 in the flow chart shown in Fig. 3.

Additionally, in step S65. at least one hand 1100b of the person equipped with the camera 100 and the body sensors 200 by the hand tracking device 120 is tracked in the three-dimensional camera data 1100. In parallel, the position of the at least one hand 2100ab is estimated by the skeletal model 2100 (S66). The respective hand positions 1100b, 2100ab from the camera coordinate frame 1200 and the skeletal coordinate frame 2200 are then compared in the global coordinate frame 3000, and the camera orientation is optimized by minimizing the difference between both positions (S67).

In the subsequent step S68, the three-dimension camera data 1100 and the skeletal data 2100 are aligned by transferring the positions 1100a, 1100b of the head-mounted camera 100 and the tracked hands from the camera coordinate frame 1200 to the corresponding positions 2100aa, 2100ab in the skeletal coordinate frame 2200, so that the accuracy of the global coordinate frame 3000 is improved. Based on the aligned three-dimensional camera data 1100 and the skeletal data 2100, one or more poses of the person can be estimated in step S69 and then the process can be terminated.

Figure 7 shows a flow chart describing an example of a camera orientation optimization usable in step S67 of the flow chart depicted in Fig. 6. After starting the process, in step S70, the hand position 1100b, 2100ab of the person equipped with the camera 100 and the body sensors 200 is determined in the camera coordinate frame 1200 and the skeletal coordinate frame 2200. Subsequently, the difference of the hand position 1100b, 2100ab between the skeletal data 2100 and the three-dimensional camera data 1100 is calculated in the global coordinate frame 3000.

If a difference between the hand positions 1100b, 2100ab determined in the camera coordinate frame 1200 and the skeleton coordinate frame 2200 is smaller than a first predetermined threshold, the orientation of the camera 100 is maintained and the parameters defining the camera position are stored in a storage medium of the apparatus 10 (S73).

However, if a difference between the hand positions 1100b, 2100ab determined in the camera coordinate frame 1200 and the skeleton coordinate frame 2200 is larger than the first predetermined threshold, the orientation of the camera 100 is updated (S72). The updating process is repeated until the difference between the hand positions 1100b, 2100ab in both coordinate frames 1200, 2200 falls below the first predetermined threshold. Then the camera orientation parameters are stored (S73) and the process is terminated.

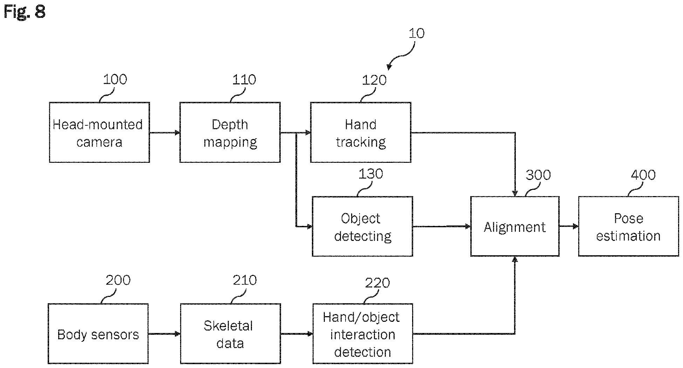

Figure 8 shows schematically a third example of an apparatus 10 according to the proposed subject matter. The apparatus 10 according to the third example is identical to the apparatus 10 of the second example except that an object detecting device 130 and a hand/object interaction device (body part/object interaction device) 220 are added thereto.

The object detecting device 130 may detect an object, such as a workpiece, in the three-dimensional camera data 1100, and the hand/object interaction device 220 may detect an interaction between a person's hand with the tracked object in the skeletal data 2100. The alignment device 120 may compare the positions of the tracked object and the hand interacting with the tracked object in the two coordinate frames 1200, 2200.

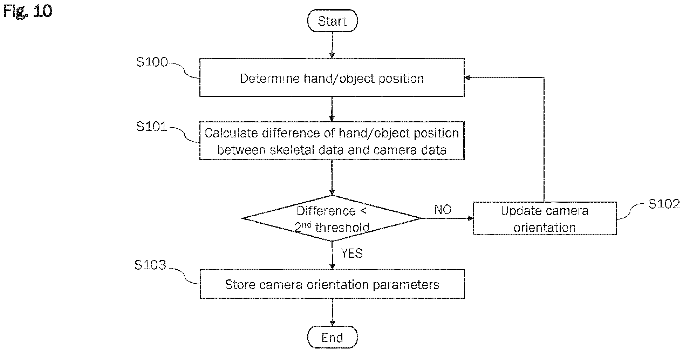

Based on the difference between the determined positions in both coordinate frames 1200, 2200, the orientation of the camera 100 may be optimized by the alignment device 300 as described below in connection with Fig. 10.

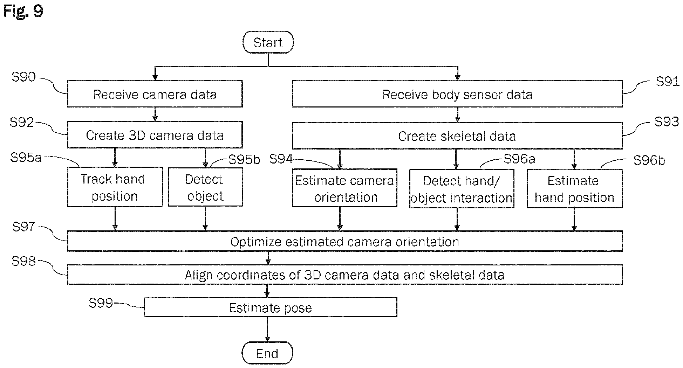

Figure 9 shows a flow chart describing a third example of a method according to the proposed subject matter. The steps S90 to S94 are identical to the steps S60 to S64 in the flow chart shown in Fig. 6. Furthermore, the steps S95a and S96a are identical to the steps S65 and S66 in Fig. 6. Additionally, in step S95b an object interacting with the tracked hand 1100b is detected by the object detection device 130 in the three-dimensional camera data 1100. As the object interacts with the hand, the object position can be considered to be close/adjacent/identical to the tracked hand position 1100b. In parallel, the interaction of the person's hand is detected by the hand/object interaction device 220 in the skeletal data 2100. This means that the position of the object and the hand interacting with the object detected in both coordinate frames 1200, 2200 can also be used by the alignment device 300 to optimize the camera orientation in the subsequent step S97.

In step S98, the three-dimension camera data 1100 and the skeletal data 2100 are aligned by transferring the positions of the head-mounted camera 100 and the hand/object interaction from the camera coordinate frame 1200 to the corresponding position in the skeletal coordinate frame 2200, so that the accuracy of the global coordinate frame 3000 is improved. Based on the aligned three-dimensional camera data 1100 and skeletal data 2100, one or more poses of the person can be estimated in step S99 and then the process can be terminated.

Figure 10 shows an example of a camera orientation optimization usable in step S97 of the flow chart depicted in Fig. 9.

After starting the process, in step S100, the object position is determined in the camera coordinate frame 1200 and the position of the hand/object interaction is determined in the skeletal coordinate frame 2200. Subsequently, in step S101, a difference between the object position in the three-dimensional camera data 1100 and the hand/object interaction position in the skeletal data 2100 is calculated in the global coordinate frame 3000.

If the difference between both positions is smaller than a second predetermined threshold, the orientation of the camera 100 is maintained and the parameters defining the camera position are stored in a storage medium of the apparatus 10 (S103).

However, if a difference between both positions is larger than the second predetermined threshold, the orientation of the camera 100 is updated (S102). The updating process is repeated until the difference between both positions falls below the second predetermined threshold. Then the camera orientation parameters are stored (S103) and the process is terminated.

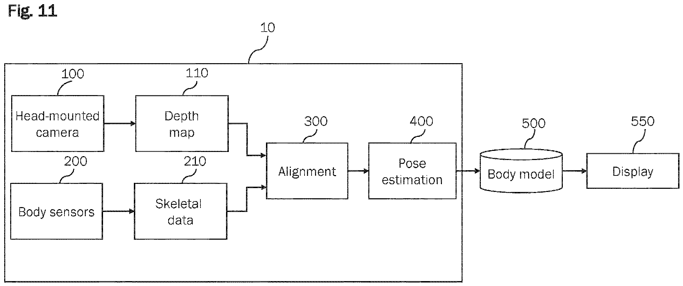

Figure 11 shows schematically a first example of a system according to the proposed subject matter. The system comprises an apparatus 10 including a head mounted camera 100 and one or more body sensors 200, which can be worn by a person instructed to perform a working process, a depth mapping device 110, a skeletal data device 210, an alignment device 300 and a pose estimation device 400. The apparatus 10 may have the characteristics/functions/capabilities described in the Figs. 1, 4 and 8.

The depicted system further comprises a body model database 500 and a display 550. The display 550 may be part of an output device (not depicted), which may be configured to transmit information to external devices. The body model database 500 stores at least one body model, which may be, for example a skinned multi-person linear (SMPL) model. However, any other type of body model may also be used.

The system displays one or more poses of the person equipped with the head-mounted camera 100 and the one or more body sensors 200 on the display 550. The person may preferably be a worker/mechanic/technician instructed to perform a particular working/assembling/ machining process. The person's poses are estimated by the apparatus 10 using the at least one body model stored in the body model database 500. Thus, the system allows, for example, to provide a video sequence based on the poses of the person, e.g., to demonstrate a working process for assembling/machining a workpiece.

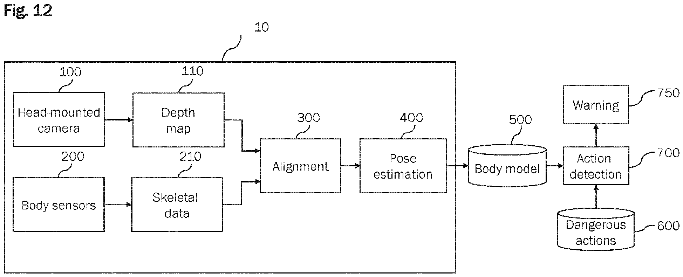

Figure 12 shows schematically a second example of a system according to the proposed subject matter. The apparatus 10 shown is identical to the apparatus depicted in Fig. 11 and may also have the characteristics/functions/capabilities described in the Figs. 1, 4 and 8. Moreover, the system also includes the body model database 500 as described in Fig. 11.

In addition to the already known elements, an action detection device 700, a dangerous action database 600 and a warning device 750 are included in the system demonstrated in Fig. 12.

The action detection device 700, the dangerous action database 600 and the warning device 750 may be included in a common computing unit (not depicted), which may be configured to receive output parameters of the body model database 500. The common computing unit may be part of the apparatus 10 or may be located outside the apparatus 10. Alternatively, the action detection device 700, the dangerous action database 600 and the warning device 750 may be included in separate computing units (not depicted) being located within or separate from the apparatus 10.

The dangerous action database 600 may store a plurality of predetermined dangerous actions. A dangerous action may be a human action leading to a dangerous situation for the person carrying out the working process or other persons in the vicinity.

The system may detect a dangerous action of the person by comparing the person's poses estimated by the apparatus 10 with the plurality of dangerous actions stored on the dangerous action database 600. If a dangerous action is determined by said comparison, a warning signal may be generated by the warning device 750, which may be output via the output device (not depicted). The warning signal may be a visual and/or audible warning signal that alerts the person that his/her current action may lead to a dangerous situation.

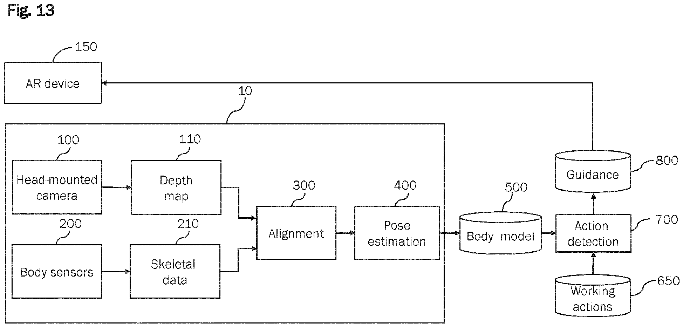

Figure 13 shows schematically a third example of a system according to the proposed subject matter. The apparatus 10 shown is identical to the apparatus depicted in the Figs. 11 and 12 and may also have the characteristics/functions/capabilities described in the Figs. 1, 4 and 8. Furthermore, the system also includes the body model database 500 and the action detection device 700 as described in Fig. 12.

In addition to the already known elements, a working action database 650, a guidance database 800 and an augmented reality device 150 are included in the system demonstrated in Fig. 13.

The action detection device 700, the working action database 650 and the guidance database 800 may be included in a common computing unit (not depicted), which may be configured to receive output parameters of the body model database 500. The common computing unit may be part of the apparatus 10 or may be located outside the apparatus 10. Alternatively, the action detection device 700, the working action database 650 and the guidance database 800 may be included in separate computing units (not depicted) being located within or separate from the apparatus 10.

The working action database 650 may store a plurality of predetermined working actions. A working action may be a human action related to a working process such as assembling, drilling, jiggering etc.. The guidance database 800 may include information for supporting/improving/optimizing a working process as well as information for avoiding dangerous situations throughout the working process. The augmented reality device 150 may be a pair of glasses, a smartphone, a tablet or any other device suitable for providing augmented reality elements.

The system may detect a working action of the person by comparing the person's poses estimated by the apparatus 10 with the plurality of working actions stored on the working action database 650 and may determine a guidance information related to the detected working action based on the plurality of guidance information stored in the guidance database 800.

Subsequently, the system may output the determined guidance information to the augmented reality device 150 worn/carried by the person via the output device (not depicted).

Summarizing, the disclosed subject matter allows for estimating the poses of a person equipped with a camera and one or more sensors in an unknown and unrestricted environment. Furthermore, it is possible to determine interactions of the person with surrounding objects such as working pieces which may be machined by the person, for example. Monitoring the interactions of a working person with his/her environment enables a continuous guidance which improves the person's working quality as well as his/her safety and health.

As will be appreciated by one of skill in the art, the present disclosure, as described hereinabove and the accompanying figures, may be embodied as a method (e.g., a computer-implemented process or any other process), apparatus (including a device, machine, system, computer program product, and/or any other apparatus), or a combination of the foregoing. Aspects/Examples of the present disclosure may be a software entirely (including firmware, resident software, micro-code, etc.), or a combination of software and hardware aspects that may be referred to as a "system". Furthermore, the present disclosure may take the form of a computer program product on a computer-readable medium having computer-executable program code embodied in the medium.

It should be noted that arrows may be used in drawings to represent communication, transfer, or other activity involving two or more entities. Double-ended arrows generally indicate that activity may occur in both directions (e.g., a command/request in one direction with a corresponding reply back in the other direction, or peer-to-peer communications initiated by either entity), although in some situations, activity may not necessarily occur in both directions.

Single-ended arrows generally indicate activity exclusively or predominantly in one direction, although it should be noted that, in certain situations, such directional activity actually may involve activities in both directions (e.g., a message from a sender to a receiver and an acknowledgement back from the receiver to the sender, or establishment of a connection prior to a transfer and termination of the connection following the transfer). Thus, the type of arrow used in a particular drawing to represent a particular activity is exemplary and should not be seen as limiting.

The present disclosure may be described with reference to flowchart illustrations and/or block diagrams of methods and apparatuses, and with reference to a number of sample views of a graphical user interface generated by the methods and/or apparatuses. It will be understood that each block of the flowchart illustrations and/or block diagrams, and/or combinations of blocks in the flowchart illustrations and/or block diagrams, as well as the graphical user interface, can be implemented by computer-executable program code.

The computer-executable program code may be provided to a processor of a general purpose computer, special purpose computer, or other programmable data processing apparatus to produce a particular machine, such that the program code, which executes via the processor of the computer or other programmable data processing apparatus, create means for implementing the functions/acts/outputs specified in the flowchart, block diagram block or blocks, figures, and/or written description.

The computer-executable program code may also be stored in a computer-readable memory that can direct a computer or other programmable data processing apparatus to function in a particular manner, such that the program code stored in the computer readable memory produce an article of manufacture including instruction means which implement the function/act/output specified in the flowchart, block diagram block(s), figures, and/or written description.

The computer-executable program code may also be loaded onto a computer or other programmable data processing apparatus to cause a series of operational steps to be performed on the computer or other programmable apparatus to produce a computer-implemented process such that the program code which executes on the computer or other programmable apparatus provides steps for implementing the functions/acts/outputs specified in the flowchart, block diagram block(s), figures, and/or written description. Alternatively, computer program implemented steps or acts may be combined with operator or human implemented steps or acts in order to carry out an embodiment of the disclosure.

It should be noted that terms such as "server" and "processor" may be used herein to describe devices that may be used in certain aspects of the present disclosure and should not be construed to limit the present disclosure to any particular device type unless the context otherwise requires. Thus, a device may include, without limitation, a bridge, router, bridge-router (brouter), switch, node, server, computer, appliance, or other type of device. Such devices typically include one or more network interfaces for communicating over a communication network and a processor (e.g., a microprocessor with memory and other peripherals and/or application-specific hardware) configured accordingly to perform device functions.

Communication networks generally may include public and/or private networks; may include local-area, wide-area, metropolitan-area, storage, and/or other types of networks; and may employ communication technologies including, but in no way limited to, analog technologies, digital technologies, optical technologies, wireless technologies (e.g., Bluetooth), networking technologies, and internetworking technologies.

It should also be noted that devices may use communication protocols and messages (e.g., messages created, transmitted, received, stored, and/or processed by the device), and such messages may be conveyed by a communication network or medium.

Unless the context otherwise requires, the present disclosure should not be construed as being limited to any particular communication message type, communication message format, or communication protocol. Thus, a communication message generally may include, without limitation, a frame, packet, datagram, user datagram, cell, or other type of communication message.

Unless the context requires otherwise, references to specific communication protocols are exemplary, and it should be understood that alternatives may, as appropriate, employ variations of such communication protocols (e.g., modifications or extensions of the protocol that may be made from time-to-time) or other protocols either known or developed in the future.

It should also be noted that logic flows may be described herein to demonstrate various aspects of the disclosure, and should not be construed to limit the present disclosure to any particular logic flow or logic implementation. The described logic may be partitioned into different logic blocks (e.g., programs, modules, functions, or subroutines) without changing the overall results or otherwise departing from the true scope of the disclosure.

Often, logic elements may be added, modified, omitted, performed in a different order, or implemented using different logic constructs (e.g., logic gates, looping primitives, conditional logic, and other logic constructs) without changing the overall results or otherwise departing from the scope of the disclosure.

The present disclosure may be embodied in many different forms, including, but in no way limited to, a graphical processing unit as well as computer program logic for use with a processor (e.g., a microprocessor, microcontroller, digital signal processor, or general purpose computer), programmable logic for use with a programmable logic device (e.g., a Field Programmable Gate Array (FPGA) or other PLD), discrete components, integrated circuitry (e.g., an Application Specific Integrated Circuit (ASIC)), or any other means including any combination thereof Computer program logic implementing some or all of the described functionality is typically implemented as a set of computer program instructions that is converted into a computer executable form, stored as such in a computer readable medium, and executed by a microprocessor under the control of an operating system. Hardware-based logic implementing some or all of the described functionality may be implemented using one or more appropriately configured FPGAs.

Computer program logic implementing all or part of the functionality previously described herein may be embodied in various forms, including, but in no way limited to, a source code form, a computer executable form, and various intermediate forms (e.g., forms generated by an assembler, compiler, linker, or locator).

Source code may include a series of computer program instructions implemented in any of various programming languages (e.g., an object code, an assembly language, or a high-level language such as Fortran, python, C, C++, JAVA, JavaScript or HTML) for use with various operating systems or operating environments. The source code may define and use various data structures and communication messages. The source code may be in a computer executable form (e.g., via an interpreter), or the source code maybe converted (e.g., via a translator, assembler, or compiler) into a computer executable form.

Computer-executable program code for carrying out operations of embodiments of the present disclosure may be written in an object oriented, scripted or unscripted programming language such as Java, Perl, Smalltalk, C++, or the like. However, the computer program code for carrying out operations of aspects of the present disclosure may also be written in conventional procedural programming languages, such as the "C" programming language or similar programming languages.

Computer program logic implementing all or part of the functionality previously described herein may be executed at different times on a single processor (e.g., concurrently) or may be executed at the same or different times on multiple processors and may run under a single operating system process/thread or under different operating system processes/threads.

Thus, the term "(computer) process" refers generally to the execution of a set of computer program instructions regardless of whether different computer processes are executed on the same or different processors and regardless of whether different computer processes run under the same operating system process/thread or different operating system processes/threads.

The computer program may be fixed in any form (e.g., source code form, computer executable form, or an intermediate form) either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), a PC card (e.g., PCMCIA card), or other memory device.

The computer program may be fixed in any form in a signal that is transmittable to a computer using any of various communication technologies, including, but in no way limited to, analog technologies, digital technologies, optical technologies, wireless technologies (e.g., Bluetooth), networking technologies, and internetworking technologies.

The computer program may be distributed in any form as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web).

Hardware logic (including programmable logic for use with a programmable logic device) implementing all or part of the functionality previously described herein may be designed using traditional manual methods, or may be designed, captured, simulated, or documented electronically using various tools, such as Computer Aided Design (CAD), a hardware description language (e.g., VHDL or AHDL), or a PLD programming language (e.g., PALASM, ABEL, or CUPL).

Any suitable computer readable medium may be utilized. The computer readable medium may be, for example but not limited to, an electronic, magnetic, optical, electromagnetic, infrared, or semiconductor system, apparatus, device, or medium.

More specific examples of the computer readable medium include, but are not limited to, an electrical connection having one or more wires or other tangible storage medium such as a portable computer diskette, a hard disk, a random access memory (RAM), a read-only memory (ROM), an erasable programmable read-only memory (EPROM or Flash memory), a compact disc read-only memory (CD-ROM), or other optical or magnetic storage device.

Programmable logic may be fixed either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), or other memory device.

The programmable logic may be fixed in a signal that is transmittable to a computer using any of various communication technologies, including, but in no way limited to, analog technologies, digital technologies, optical technologies, wireless technologies (e.g., Bluetooth), networking technologies, and internetworking technologies.

The programmable logic may be distributed as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web). Of course, some embodiments of the disclosure may be implemented as a combination of both software (e.g., a computer program product) and hardware. Still other aspects of the present disclosure are implemented as entirely hardware, or entirely software.

While certain exemplary aspects or examples have been described and shown in the accompanying drawings, it is to be understood that such embodiments are merely illustrative of and are not restrictive on the broad disclosure, and that the aspects of the present disclosure are not limited to the specific constructions and arrangements shown and described, since various other changes, combinations, omissions, modifications and substitutions, in addition to those set forth in the above paragraphs, are possible.

Those skilled in the art will appreciate that various adaptations, modifications, and/or combination of the just described aspects and examples can be configured. Therefore, it is to be understood that, within the scope of the appended claims, the disclosure may be practiced other than as specifically described herein. For example, unless expressly stated otherwise, the steps of processes described herein may be performed in orders different from those described herein and one or more steps may be combined, split, or performed simultaneously. Those skilled in the art will also appreciate, in view of this disclosure, that different aspects or examples of the disclosure described herein may be combined to form other aspects or examples of the disclosure.

## Claims

1. Method for estimating one or more poses of a person equipped with a camera (100) and one or more sensors (200), comprising the steps:
- receiving camera data from the camera (100) attached to a body part of the person, wherein the body part is a head of the person;
- creating a depth map based on the received camera data to generate three-dimensional camera data (1100);
- receiving one or more signals from the one or more sensors (200) attached to a body of the person;
- creating skeletal data (2100) based on the one or more received signals;
- determining the orientation of the camera (100) attached to the body part of the person using the created skeletal data (2100);
- aligning a camera coordinate frame (1200) of the three-dimensional camera data (1100) and a skeletal coordinate frame (2200) of the skeletal data (2100) based on the determined orientation of the camera (100) and a position of the camera (100) using the position of the camera as fixing point, wherein the position of the camera (100) defines a zero point (1100a, 2100aa) of the camera coordinate frame (1200) and the skeletal coordinate frame (2200);
- integrating the camera coordinate frame (1200) and the skeletal coordinate frame (2200) into a global coordinate frame (3000);
- estimating a pose of the person based on the aligned camera coordinate frame (1200)and the skeletal coordinate frame (2200) integrated into the global coordinate frame (3000),
**characterised in that**
if a body part of the person is tracked by the three-dimensional camera data (1100),
a position of the body part is determined in the camera coordinate frame (1200) and the skeletal coordinate frame (2200), and
the positions of the tracked body part (1100b) determined in the two coordinate frames (1200, 2200) are compared in the global coordinate frame (3000),
if a difference between the body part positions (1100b, 2100ab) determined in the camera coordinate frame (1200) and the skeleton coordinate frame (2200) is smaller than a predetermined threshold,
the determined orientation of the camera (100) is maintained, and
if a difference between the body part positions (1100b, 2100ab) determined in the camera coordinate frame (1200) and the skeleton coordinate frame (2200) is larger than the first predetermined threshold, the determined orientation of the camera (100) is updated.

2. Method according to claim 1, wherein
the orientation of the camera (100) is determined based on an orientation of the head of the person, wherein the orientation of the person's head is derived from the skeletal data (2100).

3. Method according to claim 1, wherein,
if an object is tracked by the three-dimensional camera data (1100) and a body part of the person interacts with the object,
a position of the tracked object is determined in the camera coordinate frame (1200),
a position of the body part interacting with the object is determined in the skeletal coordinate frame (2200), and
the positions of the tracked object and the body part interacting with the tracked object determined in the two coordinate frames (1200, 2200) are compared in the global coordinate frame (3000),
if a difference between the positions of the tracked object and the body part interacting with the tracked object determined in the camera coordinate frame (1200) and the skeleton coordinate frame (2200) is smaller than a second predetermined threshold,
the determined orientation of the camera (100) is maintained, and
if a difference between the positions of the tracked object and the body part interacting with the tracked object determined in the camera coordinate frame (1200) and the skeleton coordinate frame (2200) is larger than the second predetermined threshold,
the determined orientation of the camera (100) is updated.

4. Computer program product storable in a memory comprising instructions which, when carried out by a computer, cause the computer to perform the method according to at least one of the method claims 1 to 3.

5. Apparatus (10) for estimating one or more poses of a person comprising
a camera (100) configured to be attached to a body part of a person; one or more sensors (200) configured to be attached to a body of the person; and
a depth mapping device (110) configured to receive camera data from the camera (100) attached to the body part of the person, and to create a depth map based on the received camera data to generate three-dimensional camera data (2100);
a skeletal data modelling device (210) configured to receive one or more signals from the one or more sensors (200) attached to a body of the person, and to create skeletal data (2100) based on the one or more received signals;
an alignment device (300) configured to receive the three-dimensional camera data (1100) and the skeletal data (2100), to determine the orientation of the camera (100) attached to the body part of the person using the created skeletal data (2100), and to align a camera coordinate frame (1200) of the three-dimensional camera data (1100) and a skeletal coordinate frame (2100) of the skeletal data (2100) based on the determined orientation of the camera (100) and a position of the camera (100) using the position of the camera as a fixing point, wherein the position of the camera (100) a zero point (1100a, 2100aa) of the camera coordinate frame (1200) and the skeletal coordinate frame (2100), and to integrate the camera coordinate frame (1200) and the skeletal coordinate frame (2100) into a global coordinate frame (3000);
a pose estimation device (400) configured to receive the aligned three-dimensional camera data (1100) and skeletal data (2100) integrated into the global coordinate frame (3000), and to estimate a pose of the person based on the aligned three-dimensional camera data (1100) and the skeletal data (2100) integrated into the global coordinate frame (3000); and
a body part tracking device (120), an object detecting device (130) and a body part/object interaction device (220)
**characterised in that**
if a body part of the person is tracked by the body part tracking device (120) in the three-dimensional camera data (1100),
the alignment device (300) is configured to determine a position of the body part (1100b) in the camera coordinate frame (1200) and the skeletal coordinate frame (2200), and to compare the positions of the tracked body part (1100b) determined in the two coordinate frames (1200, 2200) in the global coordinate frame (3000),
if a difference between the body part positions (1100b, 2100ab) determined in the camera coordinate frame (1200) and the skeleton coordinate frame (2200) is smaller than a first predetermined threshold,
to maintain the determined orientation of the camera (100), and
if a difference between the body part positions (1100b) determined in the camera coordinate frame (1200) and the skeleton coordinate frame (2200) is larger than the first predetermined threshold,
to update the determined orientation of the camera (100).

6. Apparatus (10) according to claim 5, wherein
the skeletal data modelling device (210) is configured to determine an orientation of the head of the person and to send the determined orientation of the person's head to the alignment device (300), and
the alignment device (300) is configured to determine the orientation of the camera (100) based on the received orientation of the person's head.

7. Apparatus (10) according to claim 5, wherein
if an object is detected by the object detection device (130) in the three-dimensional camera data (1100) and an interaction of a body part of the person with the object is detected by the body part/object interaction device (220) in the skeletal data (2100),
the alignment device (300) is configured to determine a position of the tracked object in the camera coordinate frame (1200),
to determine the position of the body part interacting with the object in the skeletal coordinate frame (2200), and
to compare the positions of the tracked object and the body part interacting with the tracked object determined in the two coordinate frames (1200, 2200) in the global coordinate frame (3000),
if a difference between the positions of the tracked object and the body part interacting with the tracked object determined in the camera coordinate frame (1200) and the skeleton coordinate frame (2200) is smaller than a second predetermined threshold,
to maintain the determined orientation of the camera (100), and
if a difference between the positions of the tracked object and the body part interacting with the tracked object determined in the camera coordinate frame (1200) and the skeleton coordinate (2200) frame is larger than the predetermined threshold,
to update the determined orientation of the camera (100).

8. System for supporting a working process including
a body model database (500) for storing at least one body model,
at least one output device comprising at least one display (550), and
the apparatus (10) for estimating one or more poses of a person according to at least one of the claims 5 to 7, wherein
the system is configured to display one or more poses of a person on the display (550) of the output device, the poses being estimated by the apparatus (10) using the at least one body model stored in the body model database (500).

9. System according to claim 8 further including
at least one human action database (600, 650) for storing a plurality of human actions,
at least one guidance database (800) for storing a plurality of guidance information related to the plurality of human actions stored in the human action database (600, 650), and
an action detection device (700) for detecting an action of the person; and
an augmented reality device (150) for providing augmented reality elements to the person, wherein
the system is configured to detect an action of the person by comparing on one or more poses of the person estimated by the apparatus (10) with the plurality of human actions stored on the human action database (600, 650),
to determine a guidance information related to the detected action based on the plurality of guidance information stored in the guidance database (800), and
to output the determined guidance information to the augmented reality device (150) of the person via the output device.

10. System according to claim 9, wherein
the at least one human action database (600, 650) is configured to store predetermined working actions and/or predetermined dangerous actions.

11. System according to claim 9 or 10, wherein the output device is configured to output at least one guidance information and/or to output at least one warning signal.

## Patentansprüche

1. Verfahren zum Schätzen einer oder mehrerer Haltungen einer Person, die mit einer Kamera (100) und einem oder mehreren Sensoren (200) ausgestattet ist, das die Schritte umfasst:
- Empfangen von Kameradaten von der Kamera (100), die an einem Körperteil der Person angebracht ist, wobei der Körperteil der Kopf der Person ist;
- Erzeugen einer Tiefenkarte anhand der empfangenen Kameradaten, um dreidimensionale Kameradaten (1100) zu erzeugen;
- Empfangen eines oder mehrerer Signale von dem einen oder den mehreren Sensoren (200), die am Körper der Person angebracht sind;
- Erzeugen von Skelettdaten (2100) anhand des einen oder der mehreren empfangenen Signale;
- Bestimmen der Ausrichtung der Kamera (100), die an dem Körperteil der Person angebracht ist, unter Verwendung der erzeugten Skelettdaten (2100);
- Ausrichten eines Kamerakoordinatenrahmens (1200) der dreidimensionalen Kameradaten (1100) und eines Skelettkoordinatenrahmens (2200) der Skelettdaten (2100) anhand der bestimmten Ausrichtung der Kamera (100) und einer Position der Kamera (100) unter Verwendung der Position der Kamera als Fixpunkt, wobei die Position der Kamera (100) einen Nullpunkt (1100a, 2100aa) des Kamerakoordinatenrahmens (1200) und des Skelettkoordinatenrahmens (2200) definiert;
- Integrieren des Kamerakoordinatenrahmens (1200) und des Skelettkoordinatenrahmens (2200) in einen globalen Koordinatenrahmen (3000);
- Schätzen einer Haltung der Person anhand des ausgerichteten Kamerakoordinatenrahmens (1200) und Skelettkoordinatenrahmens (2200), die in den globalen Koordinatenrahmen (300) integriert wurden,
**dadurch gekennzeichnet, dass**
dann, wenn ein Körperteil der Person durch die dreidimensionalen Kameradaten (1100) verfolgt wird,
eine Position des Körperteils in dem Kamerakoordinatenrahmen (1200) und dem Skelettkoordinatenrahmen (2200) bestimmt wird und
die Positionen des verfolgten Körperteils (1100b), die in den beiden Koordinatenrahmen (1200, 2200) bestimmt werden, in dem globalen Koordinatenrahmen (3000) verglichen werden,
dann, wenn ein Unterschied zwischen den Körperteilpositionen (1100b, 2100ab), die in dem Kamerakoordinatenrahmen (1200) und dem Skelettkoordinatenrahmen (2200) bestimmt werden, kleiner als ein vorgegebener Schwellenwert ist,
die bestimmte Ausrichtung der Kamera (100) beibehalten wird, und
dann, wenn ein Unterschied zwischen den Körperteilpositionen (1100b, 2100ab), die in dem Kamerakoordinatenrahmen (1200) und dem Skelettkoordinatenrahmen (2200) bestimmt werden, größer als der erste vorgegebene Schwellenwert ist, die bestimmte Ausrichtung der Kamera (100) aktualisiert wird.

2. Verfahren nach Anspruch 1, wobei
die Ausrichtung der Kamera (100) anhand einer Ausrichtung des Kopfes der Person bestimmt wird, wobei die Ausrichtung des Kopfes der Person von den Skelettdaten (2100) abgeleitet wird.

3. Verfahren nach Anspruch 1, wobei
dann, wenn ein Objekt durch die dreidimensionalen Kameradaten (1100) verfolgt wird und ein Körperteil der Person mit dem Objekt interagiert,
eine Position des verfolgten Objekts in dem Kamerakoordinatenrahmen (1200) bestimmt wird,
eine Position des Körperteils, der mit dem Objekt interagiert, in dem Skelettkoordinatenrahmen (2200) bestimmt wird und
die Positionen des verfolgten Objekts und des Körperteils, der mit dem verfolgten Objekt interagiert, die in den beiden Koordinatenrahmen (1200, 2200) bestimmt wurden, in dem globalen Koordinatenrahmen (3000) verglichen werden,
dann, wenn ein Unterschied zwischen den Positionen des verfolgten Objekts und des Körperteils, der mit dem verfolgten Objekt interagiert, die in dem Kamerakoordinatenrahmen (1200) und dem Skelettkoordinatenrahmen (2200) bestimmt wurden, kleiner als ein zweiter vorgegebener Schwellenwert ist,
die bestimmte Ausrichtung der Kamera (100) beibehalten wird und
dann, wenn ein Unterschied zwischen den Positionen des verfolgten Objekts und des Körperteils, der mit dem verfolgten Objekt interagiert, die in dem Kamerakoordinatenrahmen (1200) und dem Skelettkoordinatenrahmen (2200) bestimmt wurden, größer als der zweite vorgegebene Schwellenwert ist,
die bestimmte Ausrichtung der Kamera (100) aktualisiert wird.

4. Computerprogrammprodukt, das in einem Speicher gespeichert werden kann, der Anweisungen umfasst, die dann, wenn sie durch einen Computer ausgeführt werden, bewirken, dass der Computer das Verfahren nach mindestens einem der Verfahrensansprüche 1 bis 3 ausführt.

5. Vorrichtung (10) zum Schätzen einer oder mehrerer Haltungen einer Person, die umfasst:
eine Kamera (100), die konfiguriert ist, an einem Körperteil einer Person angebracht zu werden;
einen oder mehrere Sensoren (200), die konfiguriert sind, am Körper der Person angebracht zu werden; und
eine Tiefenabbildungsvorrichtung (110), die konfiguriert ist, Kameradaten von der Kamera (100), die an dem Körperteil der Person angebracht ist, zu empfangen und eine Tiefenkarte anhand der empfangen Kameradaten zu erzeugen, um dreidimensionale Kameradaten (2100) zu erzeugen;
eine Skelettdatenmodelliervorrichtung (210), die konfiguriert ist, ein oder mehrerer Signale von dem einen oder den mehreren Sensoren (200), die an einem Körper der Person angebracht sind, zu empfangen und Skelettdaten (2100) anhand des einen oder der mehreren empfangenen Signale zu erzeugen;
eine Ausrichtungsvorrichtung (300), die konfiguriert ist, die dreidimensionalen Kameradaten (1100) und die Skelettdaten (2100) zu empfangen, um die Ausrichtung der Kamera (100), die an dem Körperteil der Person angebracht ist, unter Verwendung der erzeugten Skelettdaten (2100) zu bestimmen und einen Kamerakoordinatenrahmen (1200) der dreidimensionalen Kameradaten (1100) und einen Skelettkoordinatenrahmen (2100) der Skelettdaten (2100) anhand der bestimmten Ausrichtung der Kamera (100) und einer Position der Kamera (100) unter Verwendung der Position der Kamera als Fixpunkt auszurichten, wobei die Position der Kamera (100) einen Nullpunkt (1100a, 2100aa) des Kamerakoordinatenrahmens (1200) und des Skelettkoordinatenrahmens (2100) definiert, und den Kamerakoordinatenrahmen (1200) und den Skelettkoordinatenrahmen (2100) in einen globalen Koordinatenrahmen (3000) zu integrieren;
eine Haltungsschätzvorrichtung (400), die konfiguriert ist, die ausgerichteten dreidimensionalen Kameradaten (1100) und die Skelettdaten (2100), die in den globalen Koordinatenrahmen (3000) integriert wurden, zu empfangen und eine Haltung der Person anhand der ausgerichteten dreidimensionalen Kameradaten (1100) und der Skelettdaten (2100), die in den globalen Koordinatenrahmen integriert wurden, zu schätzen; und
eine Körperteilverfolgungsvorrichtung (120), eine Objektdetektionsvorrichtung (130) und eine Körperteil/Objekt-Interaktionsvorrichtung (220),
**dadurch gekennzeichnet, dass**
dann, wenn ein Körperteil der Person durch die Körperteilverfolgungsvorrichtung (120) in den dreidimensionalen Kameradaten (1100) verfolgt wird,
die Ausrichtungsvorrichtung (300) konfiguriert ist, eine Position des Körperteils (1100b) in dem Kamerakoordinatenrahmen (1200) und dem Skelettkoordinatenrahmen (2200) zu bestimmen und die Positionen des verfolgten Körperteils (1100b), die in den beiden Koordinatenrahmen (1200, 2200) bestimmt werden, in dem globalen Koordinatenrahmen (3000) zu vergleichen,
dann, wenn ein Unterschied zwischen den Körperteilpositionen (1100b, 2100ab), die in dem Kamerakoordinatenrahmen (1200) und dem Skelettkoordinatenrahmen (2200) bestimmt wurden, kleiner als ein erster vorgegebener Schwellenwert ist,
die bestimmte Ausrichtung der Kamera (100) beizubehalten und
dann, wenn ein Unterschied zwischen den Körperteilpositionen (1100b), die in dem Kamerakoordinatenrahmen (1200) und dem Skelettkoordinatenrahmen (2200) bestimmt wurden, größer als der erste vorgegebene Schwellenwert ist,
die bestimmte Ausrichtung der Kamera (100) zu aktualisieren.

6. Vorrichtung (10) nach Anspruch 5, wobei
die Skelettdatenmodelliervorrichtung (210) konfiguriert ist, eine Ausrichtung des Kopfes der Person zu bestimmen und die bestimmte Ausrichtung des Kopfes der Person an die Ausrichtungsvorrichtung (300) zu senden, und
die Ausrichtungsvorrichtung (300) konfiguriert ist, die Ausrichtung der Kamera (100) anhand der empfangenen Ausrichtung des Kopfes der Person zu bestimmen.

7. Vorrichtung (10) nach Anspruch 5, wobei
dann, wenn ein Objekt durch die Objektdetektionsvorrichtung (130) in den dreidimensionalen Kameradaten (1100) detektiert wird und eine Interaktion eines Körperteils der Person mit dem Objekt durch die Körperteil/Objekt-Interaktionsvorrichtung (220) in den Skelettdaten (2100) detektiert wird,
die Ausrichtungsvorrichtung (300) konfiguriert ist, eine Position des verfolgten Objekts in dem Kamerakoordinatenrahmen (1200) zu bestimmen,
die Position des Körperteils, der mit dem Objekt interagiert, in dem Skelettkoordinatenrahmen (2200) zu bestimmen und
die Positionen des verfolgten Objekts und des Körperteils, der mit dem verfolgten Objekt interagiert, die in den beiden Koordinatenrahmen (1200, 2200) bestimmt wurden, in dem globalen Koordinatenrahmen (3000) zu vergleichen,
dann, wenn ein Unterschied zwischen den Positionen des verfolgten Objekts und des Körperteils, der mit dem verfolgten Objekt interagiert, die in dem Kamerakoordinatenrahmen (1200) und dem Skelettkoordinatenrahmen (2200) bestimmt wurden, kleiner als ein zweiter vorgegebener Schwellenwert ist,
die bestimmte Ausrichtung der Kamera (100) beizubehalten und
dann, wenn ein Unterschied zwischen den Positionen des verfolgten Objekts und des Körperteils, der mit dem verfolgten Objekt interagiert, die in dem Kamerakoordinatenrahmen (1200) und dem Skelettkoordinatenrahmen (2200) bestimmt wurden, größer als der zweite vorgegebene Schwellenwert ist,
die bestimmte Ausrichtung der Kamera (100) zu aktualisieren.

8. System zum Unterstützen eines Arbeitsprozesses, das enthält:
eine Körpermodelldatenbank (500) zum Speichern mindestens eines Körpermodells,
mindestens eine Ausgabevorrichtung, die mindestens eine Anzeige (550) umfasst, und
die Vorrichtung (10) zum Schätzen einer oder mehrerer Haltungen einer Person nach mindestens einem der Ansprüche 5 bis 7, wobei
das System konfiguriert ist, eine oder mehrere Haltungen einer Person auf der Anzeige (550) der Ausgabevorrichtung anzuzeigen, wobei die Haltungen durch die Vorrichtung (10) unter Verwendung mindestens eines in der Körpermodelldatenbank (500) gespeicherten Körpermodells geschätzt werden.

9. System nach Anspruch 8, das ferner enthält:
mindestens eine Datenbank menschlicher Handlungen (600, 650) zum Speichern mehrerer menschlicher Handlungen,
mindestens eine Führungsdatenbank (800) zum Speichern mehrerer Führungsinformationen bezüglich der mehreren in der Datenbank menschlicher Handlungen (600, 650) gespeicherten menschlichen Handlungen und
eine Handlungsdetektionsvorrichtung (700) zum Detektieren einer Handlung der Person; und
eine Vorrichtung erweiterter Realität (150) zum Bereitstellen von Elementen erweiterter Realität für die Person, wobei
das System konfiguriert ist, eine Handlung der Person durch Vergleichen einer oder mehrerer Haltungen der Person, die durch die Vorrichtung (10) geschätzt werden, mit den mehreren in der Datenbank menschlicher Handlungen (600, 650) gespeicherten menschlichen Handlungen zu detektieren,
Führungsinformationen bezüglich der detektierten Handlung anhand der mehreren in der Führungsdatenbank (800) gespeicherten Führungsinformationen zu bestimmen und
die bestimmten Führungsinformationen an die Vorrichtung erweiterter Realität (150) der Person über die Ausgabevorrichtung auszugeben.

10. System nach Anspruch 9, wobei
die mindestens eine Datenbank menschlicher Handlungen (600, 650) konfiguriert ist, vorgegebene Arbeitshandlungen und/oder vorgegebene gefährliche Handlungen zu speichern.

11. System nach Anspruch 9 oder 10, wobei die Ausgabevorrichtung konfiguriert ist, mindestens Führungsinformationen auszugeben und/oder mindestens ein Warnsignal auszugeben.

## Revendications

1. Procédé d'estimation d'une de plusieurs poses d'une personne équipée d'une caméra (100) et d'un ou de plusieurs capteurs (200), comprenant les étapes consistant à :
- recevoir des données de caméra depuis la caméra (100) attachée à une partie du corps de la personne, la partie du corps étant une tête de la personne ;
- créer une carte de profondeur sur la base des données de caméra reçues pour générer des données de caméra tridimensionnelles (1100) ;
- recevoir un ou plusieurs signaux depuis lesdits un ou plusieurs capteurs (200) attachés à un corps de la personne ;
- créer des données de squelette (2100) sur la base desdits un ou plusieurs signaux reçus ;
- déterminer l'orientation de la caméra (100) attachée à la partie du corps de la personne à l'aide des données de squelette créées (2100) ;
- aligner un cadre de coordonnées de caméra (1200) des données de caméra tridimensionnelles (1100) et un cadre de coordonnées de squelette (2200) des données de squelette (2100) sur la base de l'orientation déterminée de la caméra (100) et d'une position de la caméra (100) en utilisant la position de la caméra comme point de fixation, la position de la caméra (100) définissant un point zéro (1100a, 2100aa) du cadre de coordonnées de caméra (1200) et du cadre de coordonnées de squelette (2200) ;
- intégrer le cadre de coordonnées de caméra (1200) et le cadre de coordonnées de squelette (2200) dans un cadre de coordonnées global (3000) ;
- estimer une pose de la personne sur la base du cadre de coordonnées de caméra aligné (1200) et du cadre de coordonnées de squelette (2200) intégrés dans le cadre de coordonnée global (3000),
**caractérisé en ce que**
si une partie du corps de la personne est suivie par les données de caméra tridimensionnelles (1100),
une position de la partie du corps est déterminée dans le cadre de coordonnées de caméra (1200) et le cadre de coordonnées de squelette (2200), et
les positions de la partie du corps suivie (1100b) déterminées dans les deux cadres de coordonnées (1200, 2200) sont comparées dans le cadre de coordonnées global (3000),
si une différence entre les positions de partie du corps (1100b, 2100ab) déterminées dans le cadre de coordonnées de caméra (1200) et le cadre de coordonnées de squelette (2200) est inférieure à un seuil prédéterminé,
l'orientation déterminée de la caméra (100) est maintenue, et
si une différence entre les positions de partie du corps (1100b, 2100ab) déterminées dans le cadre de coordonnées de caméra (1200) et le cadre de coordonnées de squelette (2200) est supérieure au premier seuil prédéterminé,
l'orientation déterminée de la caméra (100) est mise à jour.

2. Procédé selon la revendication 1, dans lequel
l'orientation de la caméra (100) est déterminée sur la base d'une orientation de la tête de la personne, l'orientation de la tête de la personne étant dérivée à partir des données de squelette (2100).

3. Procédé selon la revendication 1, dans lequel
si un objet est suivi par les données de caméra tridimensionnelles (1100) et qu'une partie du corps de la personne interagit avec l'objet,
une position de l'objet suivi est déterminée dans le cadre de coordonnées de caméra (1200),
une position de la partie du corps interagissant avec l'objet est déterminée dans le cadre de coordonnées de squelette (2200), et
les positions de l'objet suivi et de la partie du corps interagissant avec l'objet suivi déterminées dans les deux cadres de coordonnées (1200, 2200) sont comparées dans le cadre de coordonnées global (3000),
si une différence entre les positions de l'objet suivi et de la partie du corps interagissant avec l'objet suivi déterminées dans le cadre de coordonnées de caméra (1200) et le cadre de coordonnées de squelette (2200) est inférieure à un second seuil prédéterminé,
l'orientation déterminée de la caméra (100) est maintenue, et
si une différence entre les positions de l'objet suivi et de la partie du corps interagissant avec l'objet suivi déterminées dans le cadre de coordonnées de caméra (1200) et le cadre de coordonnées de squelette (2200) est supérieure au second seuil prédéterminé,
l'orientation déterminée de la caméra (100) est mise à jour.

4. Produit de programme d'ordinateur pouvant être stocké dans une mémoire comprenant des instructions qui, quand elles sont exécutées par un ordinateur, amènent l'ordinateur à effectuer le procédé selon l'une au moins des revendications 1 à 3.

5. Appareil (10) destiné à estimer une ou plusieurs poses d'une personne comprenant
une caméra (100) configurée pour être attachée sur une partie du corps d'une personne ;
un ou plusieurs capteurs (200) configurés pour être attachés sur un corps de la personne ; et
un dispositif de cartographie de profondeur (110) configuré pour recevoir des données de caméra depuis la caméra (100) attachée sur la partie du corps de la personne, et pour créer une carte de profondeur sur la base des données de caméra reçues pour générer des données de caméra tridimensionnelles (2100) ;
un dispositif de modélisation de données de squelette (210) configuré pour recevoir un ou plusieurs signaux provenant desdits un ou plusieurs capteurs (200) attachés sur un corps de la personne, et pour créer des données de squelette (2100) sur la base desdits un ou plusieurs signaux reçus ;
un dispositif d'alignement (300) configuré pour recevoir les données de caméra tridimensionnelles (1100) et les données de squelette (2100), pour déterminer l'orientation de la caméra (100) attachée sur la partie du corps de la personne à l'aide des données de squelette créées (2100), et pour aligner un cadre de coordonnées de caméra (1200) des données de caméra tridimensionnelles (1100) et un cadre de coordonnées de squelette (2100) des données de squelette (2100) sur la base de l'orientation déterminée de la caméra (100) et une position de la caméra (100) en utilisant la position de la caméra comme point de fixation, la position de la caméra (100) définissant un point zéro (1100a, 2100aa) du cadre de coordonnées de caméra (1200) et du cadre de coordonnées de squelette (2100), et pour intégrer le cadre de coordonnées de caméra (1200) et le cadre de coordonnées de squelette (2100) dans un cadre de coordonné global (3000) ;
un dispositif d'estimation de poses (400) configuré pour recevoir les données de caméras tridimensionnelles alignées (1100) et les données de squelette (2100) intégrées dans le cadre de coordonnées global (3000), et pour estimer une pose de la personne sur la base des données de caméras tridimensionnelles alignées (1100) et des données de squelette (2100) intégré dans le cadre de coordonné global (3000) ; et
un dispositif de suivi de partie du corps (120), un dispositif de détection d'objet (130) et un dispositif d'interaction partie du corps/objet (220)
**caractérisé en ce que**
si une partie du corps de la personne est suivie par le dispositif de suivi de partie du corps (120) dans les données de caméras tridimensionnelles (1100),
le dispositif d'alignement (300) est configuré
pour déterminer une position de la partie du corps (1100b) dans le cadre de coordonnées de caméra (1200) et le cadre de coordonnées de squelette (2200), et pour comparer les positions de la partie du corps suivie (1100b) déterminée dans les deux cadres de coordonnées (1100, 2200) dans le cadre de coordonnées global (3000),
si une différence entre les positions de partie du corps (1100b, 2100ab) déterminées dans le cadre de coordonnées de caméra (1200) et le cadre de coordonnées de squelette (2200) est inférieure à un premier seuil prédéterminé,
pour maintenir l'orientation déterminée de la caméra (100), et
si une différence entre les positions de partie du corps (1100b, 2100ab) déterminées dans le cadre de coordonnées de caméra (1200) et le cadre de coordonnées de squelette (2200) est supérieure au premier seuil prédéterminé,
pour mettre à jour l'orientation déterminée de la caméra (100).

6. Appareil (10) selon la revendication 5, dans lequel
le dispositif de modélisation de données de squelette (210) est configuré pour déterminer une orientation de la tête de la personne pour envoyer l'orientation déterminée de la tête de la personne au dispositif d'alignement (300), et
le dispositif d'alignement (300) est configuré pour déterminer l'orientation de la caméra (100) sur la base de l'orientation reçue de la tête de la personne.

7. Appareil (10) selon la revendication 5, dans lequel
si un objet est détecté par le dispositif de détection d'objet (130) dans les données de caméras tridimensionnelles (1100) et qu'une interaction d'une partie du corps de la personne avec l'objet est détectée par le dispositif d'interaction partie du corps/objet (220) dans les données de squelette (2100),
le dispositif d'alignement (300) est configuré
pour déterminer une position de l'objet suivi dans le cadre de coordonnées de caméra (1200),
pour déterminer la position de la partie du corps interagissant avec l'objet dans le cadre de coordonnées de squelette (2200), et
pour comparer les positions de l'objet suivi et de la partie du corps interagissant avec l'objet suivi déterminées dans les deux cadres de coordonnées (1100, 2200) dans le cadre de coordonnées global (3000),
si une différence entre les positions de l'objet suivi et de la partie du corps interagissant avec l'objet suivi déterminées dans le cadre de coordonnées de caméra (1200) et le cadre de coordonnées de squelette (2200) est inférieure à un second seuil prédéterminé,
pour maintenir l'orientation déterminée de la caméra (100), et
si une différence entre les positions de l'objet suivi et de la partie du corps interagissant avec l'objet suivi déterminées dans le cadre de coordonnées de caméra (1200) et le cadre de coordonnées de squelette (2200) est supérieure au seuil prédéterminé,
pour mettre à jour l'orientation déterminée de la caméra (100).

8. Système de support d'un processus de travail incluant
une base de données de modèles de corps (500) destinée à stocker au moins un modèle de corps,
au moins un dispositif de sortie comprenant au moins un affichage (550), et
l'appareil (10) d'estimation d'une ou de plusieurs poses d'une personne selon l'une au moins des revendications 5 à 7, dans lequel
le système est configuré pour afficher une ou plusieurs poses d'une personne sur l'affichage (550) du dispositif de sortie, les poses étant estimées par l'appareil (10) à l'aide dudit au moins un modèle de corps stocké dans la base de données de modèles de corps (500).

9. Système selon la revendication 8, incluant en outre
au moins une base de données d'actions humaines (600, 650) destinée à stocker une pluralité d'actions humaines,
au moins une base de données de guidage (800) destinée à stocker une pluralité d'informations de guidage en lien avec la pluralité d'actions humaines stockées dans la base de données d'actions humaines (600, 650), et
un dispositif de détection d'action (700) destiné à détecter une action de la personne ; et
un dispositif de réalité augmentée (150) destiné à fournir des éléments de réalité augmentée à la personne, dans lequel
le système est configuré
pour détecter une action de la personne en comparant une ou plusieurs poses de la personne estimées par l'appareil (10) à la pluralité d'actions humaines stockées sur la base de données d'actions humaines (600, 650),
pour déterminer des informations de guidage en lien avec l'action détectée sur la base de la pluralité d'informations de guidage stockées dans la base de données de guidage (800), et
pour sortir les informations de guidage déterminées vers le dispositif de réalité augmentée (150) de la personne via le dispositif de sortie.

10. Système selon la revendication 9, dans lequel
ladite au moins une base de données d'actions humaines (600, 650) est configurée pour stocker des actions de travail prédéterminées et/ou des actions dangereuses prédéterminées.

11. Système selon la revendication 9 ou 10, dans lequel le dispositif de sortie est configuré pour sortir au moins un élément d'information de guidage et/ou pour sortir au moins un signal d'avertissement.
